Europäisches Patentamt

European Patent Office

Office européen des brevets

(11) Veröffentlichungsnummer: **0 077 888**
**B1**

## (12) EUROPÄISCHE PATENTSCHRIFT

(45) Veröffentlichungstag der Patentschrift:
02.10.85

(51) Int. Cl.⁴: **G 03 B 27/32**

(21) Anmeldenummer: **82107082.8**

(22) Anmeldetag: **05.08.82**

(54) Verfahren und Vorrichtung zur Erzeugung von Belichtungsmasken für die Herstellung eines Aufzeichnungsträgers mit einer Aufzeichnung hoher Informationsdichte.

(30) Priorität: **23.10.81 DE 3142025**

(43) Veröffentlichungstag der Anmeldung:
**04.05.83 Patentblatt 83/18**

(45) Bekanntmachung des Hinweises auf die Patenterteilung:
**02.10.85 Patentblatt 85/40**

(84) Benannte Vertragsstaaten:
**AT CH FR GB IT LI NL SE**

(56) Entgegenhaltungen:
**DE - A - 2 817 400
US - A - 3 472 587
US - A - 3 620 623
US - A - 3 704 946
US - A - 4 160 263**

(73) Patentinhaber: **Dr. Johannes Heidenhain GmbH,
Nansenstrasse 17, D-8225 Traunreut (DE)**

(72) Erfinder: **Michel, Dieter, Ing. grad., Langauenstrasse 12,
D-8220 Traunstein (DE)**

## Beschreibung

Die Erfindung betrifft ein Verfahren und eine Vorrichtung zur Erzeugung von Belichtungsmasken gemäß dem Oberbegriff des Anspruchs 1.

Derartige Belichtungsmasken finden beispielsweise bei der Herstellung mehrfarbiger Mikrolandkarten Verwendung. Von mehrfarbigen Originallandkarten (zum Beispiel im Maßstab 1 : 50 000) werden für jeden Farbton Farbauszüge in Form von Negativfilmvorlagen erstellt (zum Beispiel der Schwarz- oder Grundauszug, der Rotauszug, der Grünauszug und der Blauauszug). Diese Negativfilmvorlagen werden einzeln auf lichtempfindlichen Mikrovorlagenträgern aus Glas verkleinert abgebildet. Nach dem Entwickeln werden die Mikrovorlagenträger mit einer Chromschicht bedampft und anschließend die verbliebene Photolackschicht mit der darauf haftenden Chromschicht entfernt. Von den so erhaltenen Positivmikrovorlagen werden durch Kontaktkopie Negativmikrovorlagen hergestellt.

Soll ein Kartenverband aus mehreren benachbarten Originallandkarten (zum Beispiel 5 × 5 = 25 Karten) auf einem Aufzeichnungsträger aufgezeichnet werden, so müssen die entsprechenden Negativmikrovorlagen für jeden Farbton beim nachfolgenden Umkopieren manuell zueinander justiert werden, so daß ein Negativmikrovorlagenverband entsteht. Zunächst werden die Negativmikrovorlagen der Schwarz- oder Grundauszüge zum Beispiel kreuzweise aus dem Zentrum des Vorlagenverbandes heraus und anschließend die übrigen Negativmikrovorlagen zueinander justiert und kopiert. Zu diesem Zweck sind mindestens sechs Kopier- bzw. Bedampfungsschritte erforderlich.

Vom so erhaltenen Positivvorlagenverband wird zur Herstellung der Belichtungsmasken für die restlichen Farbtöne durch Kopie je ein Negativvorlagenverband erstellt, auf denen durch Retuschieren alle Details bis auf die Justiermarken in Form der Eckmarkierungen der Einzelvorlagen (bei Landkarten die sogenannte Blattecken) entfernt werden; anschließend werden die Farbauszüge einjustiert und kopiert.

Die Herstellung von Belichtungsmasken nach diesem Verfahren erfordert etwa 225 Kopierschritte (Beschichten mit einer Photolackschicht, Belichten und Entwickeln der Photolackschicht und Bedampfen mit einer Chromschicht) und etwa 204 Mikrovorlagenträger aus Glas hoher Oberflächengüte.

Der Erfindung liegt die Aufgabe zugrunde, ein Verfahren zur Erzeugung derartiger Belichtungsmasken anzugeben, bei dem die Anzahl der Verfahrensschritte und damit der Kosten- und Zeitfaktor wesentlich reduziert werden können.

Diese Aufgabe wird erfindungsgemäß durch die kennzeichnenden Merkmale des Anspruchs 1 gelöst.

Die mit der Erfindung erzielten Vorteile bestehen insbesondere darin, daß für die Erzeugung eines Satzes von vier Belichtungsmasken für die Herstellung eines Aufzeichnungsträgers mit einer vierfarbigen Aufzeichnung nur vier Belichtungsmaskenträger und ein photolithographischer Schritt erforderlich sind.

In der Zeichnung sind eine Vorrichtung und eine Schaltungsanordnung zur Durchführung des Verfahrens dargestellt und werden im folgenden näher erläutert.

Es zeigt

Fig. 1 schematisch eine Vorrichtung zur Erzeugung von Belichtungsmasken,

Fig. 2 drei Ansichten von Vorlagenhaltern für die Aufzeichnungsvorlagen und für den Belichtungsmaskenträger und

Fig. 3 eine Schaltungsanordnung zur Steuerung der Vorrichtung.

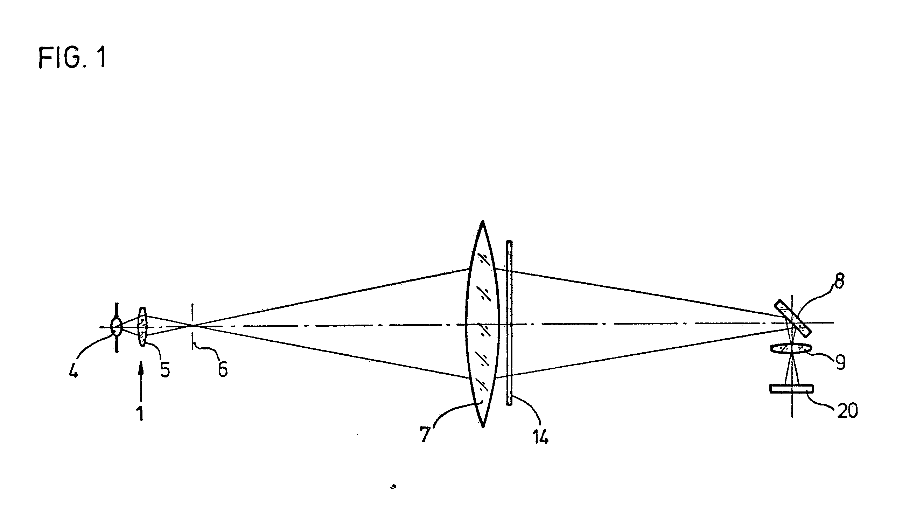

In Fig. 1 sind schematisch eine Beleuchtungseinrichtung mit einer Beleuchtungseinheit 1 und einem Kondensor 7, eine Aufzeichnungsvorlage 14 und ein Belichtungsmaskenträger 20 dargestellt. Die Beleuchtungseinheit 1 besteht aus einer Quecksilberdampfhochdrucklampe 4, einem Kondensor 5, einer Blende 6 sowie in nicht gezeigter Weise aus einem Monochromatfilter und einem Belichtungsverschluß. Im Stahlengang der Beleuchtungseinheit 1 befinden sich vor dem Belichtungsmaskenträger 20 ein Umlenkspiegel 8 und ein Abbildungsobjektiv 9.

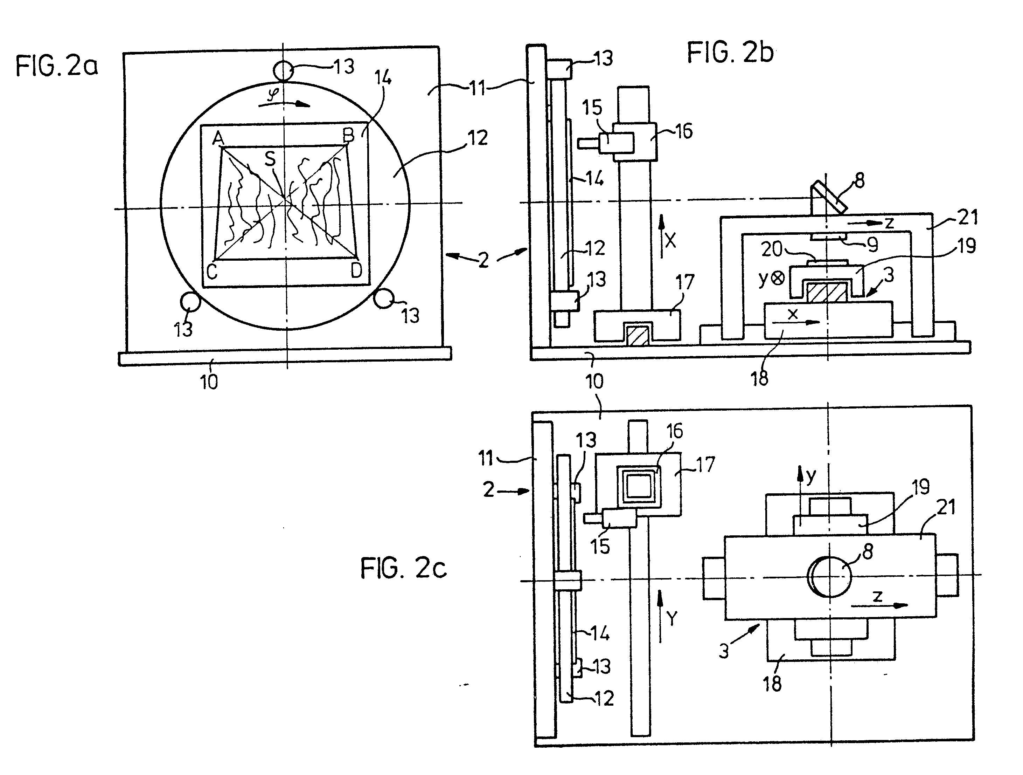

Fig. 2 zeigt einen Vorlagenhalter 2 für die Aufzeichnungsvorlage 14, der aus einem auf einer Grundplatte 10 angeordnetem Rahmen 11 besteht, an dem eine kreisförmige Planplatte 12 zwischen drei Rollen 13 um eine horizontale Achse um den Winkel $\varphi$ drehbar angeordnet ist. Die Aufzeichnungsvorlage 14 wird mittels nicht gezeigter Ansaugleisten auf der Planplatte 12 befestigt; zum Spannen der Aufzeichnungsvorlage 14 sind die Ansaugleisten parallel zur Planplatte 12 verstellbar. Zur Abtastung der Justiermarken A, B, C, D der Aufzeichnungsvorlage 14 ist ein Videomikroskop 15 vorgesehen, das mittels eines luftgelagerten Schlittens 16 in X-Richtung auf einem luftgelagerten Schlitten 17 verstellbar ist, der auf der Grundplatte 10 in Y-Richtung verschiebbar ist.

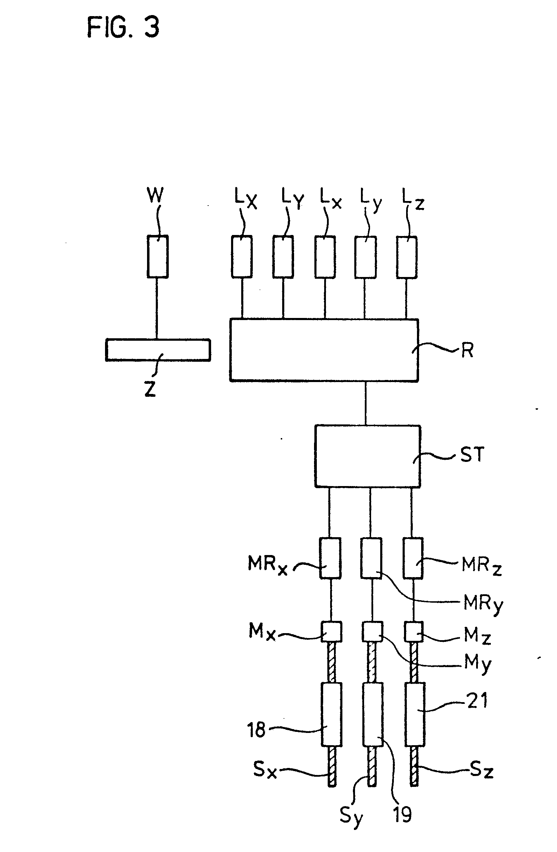

Ein Vorlagenhalter 3 für den Belichtungsmaskenträger 20 besteht aus einem auf der Grundplatte 10 in x-Richtung verschiebbaren luftgelagerten Schlitten 18, der einen in y-Richtung verschiebbaren luftgelagerten Schlitten 19 trägt, auf dem der Belichtungsmaskenträger 20 durch Ansaugen befestigt ist. Der Umlenkspiegel 8 und das Abbildungsobjektiv 9 sind auf einem in z-Richtung auf der Grundplatte 10 verschiebbaren luftgelagerten Schlitten 21 angeordnet. Die Schlitten 16, 17, 18, 19, 21 sind jeweils in nicht gezeigter Weise mit digitalen elektrischen Längenmeßeinrichtung $L_X$, $L_Y$, $L_x$, $L_y$, $L_z$ bekannter Bauart und der Rahmen 11 und die Planplatte 12 mit einer digitalen elektrischen Winkelmeßeinrichtung W bekannter Bauart verbunden; die Längenmeßeinrichtungen $L_X$, $L_Y$, $L_x$, $L_y$, $L_z$ sind an einem Rechner R und die Winkelmeßeinrichtung W an einem Zähler Z angeschlossen (Fig. 3).

Nach dem Befestigen des Belichtungsmaskenträgers 20 auf dem Schlitten 19 und der Aufzeichnungsvorlage 14 an der Planplatte 12 werden die von einer nicht dargestellten Hilfsbeleuchtung beleuchteten Justiermarken A, B, C, D auf der Aufzeichnungsvorlage 14 in Form der Blattecken der Originallandkarten manuell mit dem Videomikroskop 15 nacheinander anvisiert und die ermittelten Istkoordinatenwerte $X_{Ist}$, $Y_{Ist}$ mitsamt der Vorlagenkennziffer in den Rechner R übertragen, in den vorab die bekannten Sollkoordinatenwerte $X_{Soll}$, $Y_{Soll}$ der Justiermarken A, B, C, D der Aufzeichnungsvorlage 14 eingegeben worden sind.

Aus den Istkoordinatenwerten $X_{Ist}$, $Y_{Ist}$ der Justiermarken A, B, C, D ermittelt der Rechner R

a) den Istwinkelwert $\varphi_{Ist}$ bezüglich der aus den Sollkoordinatenwerten $X_{Soll}$, $Y_{Soll}$ resultierenden Sollwinkellage $\varphi_{Soll}$,

b) die Längen der Diagonalen zwischen den Justiermarken A, B, C, D,

c) die Istkoordinatenwerte $X_S$, $Y_S$ des Diagonalenschnittpunktes S und

d) den Korrekturfaktor K für den Verkleinerungsmaßstab durch Vergleich mit den aus den vorgegebenen Sollkoordinatenwerten $X_{Soll}$, $Y_{Soll}$ der Justiermarken A, B, C, D errechneten Sollkoordinatenwerten $X_{SO}$, $Y_{SO}$ des Solldiagonalenschnittpunktes $S_O$.

Die Planplatte 12 mit der Aufzeichnungsvorlage 14 wird um den vom Rechner R ermittelten und in einer nicht dargestellten Anzeigeeinheit des Rechners R angezeigten Winkelwert $\Delta\varphi = \varphi_{Soll} - \varphi_{Ist}$ manuell gedreht; die Einstellung des Winkelwertes $\Delta\varphi$ erfolgt mit Hilfe des zuvor auf Null gestellten Zählers Z.

Anschließend ermittelt der Rechner

a) die neuen Istkoordinatenwerte $X_{S'}$, $Y_{S'}$ des Diagonalenschnittpunktes S und korrigiert diese Istkoordinatenwerte $X_{S'}$, $Y_{S'}$ mit dem Korrekturfaktor K,

b) die zu positionierenden Koordinatenwerte x, y für den Belichtungsmaskenträger 20 aus den korrigierten neuen Istkoordinatenwerten $X_{S'}$, $Y_{S'}$ des Diagonalenschnittpunktes S und aus den Sollkoordinatenwerten $X_{SO}$, $Y_{SO}$ des Solldiagonalenschnittpunktes $S_O$ und

c) den zu positionierenden Koordinatenwert z bezüglich der Strahlenganglänge und den Schärfenkorrekturwert bezüglich des Abstandes zwischen dem Abbildungsobjektiv 9 und dem Belichtungsmaskenträger 20 aus der Brennweite des Abbildungsobjektivs 9 und dem Korrekturwert K.

Der Abstand zwischen dem Abbildungsobjektiv 9 und dem Belichtungsmaskenträger 20 wird korrigiert, wenn der Schärfenkorrekturwert einen bestimmten Betrag, beispielsweise einen Betrag größer als 1 μm überschreitet.

Nun wird der Belichtungsmaskenträger 20 bezüglich der ermittelten Koordinatenwerte x, y, z mittels einer mit dem Rechner R verbundenen, numerischen Steuerung ST positioniert, die über Motorregler $MR_x$, $MR_y$, $MR_z$ Stellmotoren $M_x$, $M_y$, $M_z$ zum Verschieben der Schlitten 18, 19, 21 über Spindeln $S_x$, $S_y$, $S_z$ beaufschlagt.

Die nachfolgende reduzierte Abbildung der Aufzeichnungsvorlage 14 auf dem lichtempfindlichen Belichtungsmaskenträger 20 wird ebenfalls von der numerischen Steuerung ST durch Auslösen des Belichtungsverschlusses veranlaßt.

Nachdem alle Aufzeichnungsvorlagen 14 eines Vorlagenverbands nacheinander auf die oben angegebene Weise justiert auf dem lichtempfindlichen Belichtungsmaskenträger 20 reduziert abgebildet worden sind, wird der Belichtungsmaskenträger 20 entwickelt und mit einer Chromschicht bedampft. Sodann wird die verbliebene lichtempfindliche Schicht mitsamt der anhaftenden Chromschicht entfernt; die derart erzeugte Belichtungsmaske dient bevorzugt zur Herstellung eines Aufzeichnungsträgers mit einer mehrfarbigen Mikrolandkarte.

## Patentansprüche

1. Verfahren zur Erzeugung von Belichtungsmasken für die Herstellung eines Aufzeichnungsträgers mit einer Aufzeichnung hoher Informationsdichte, insbesondere mit einem mehrfarbigen Mikrobild, bei dem die Aufzeichnung aus wenigstens zwei reduzierten, zueinander justierten Aufzeichnungsvorlagen mittels gespeicherter Koordinatenwerte zum Positionieren eines Belichtungsmaskenträger zusammengesetzt wird, gekennzeichnet durch folgende Verfahrensschritte:

a) die Sollkoordinatenwerte ($X_{Soll}$, $Y_{Soll}$) der Aufzeichnungsvorlagen (14) werden in einem Rechner (R) gespeichert;

b) die Istkoordinatenwerte ($X_{Ist}$, $Y_{Ist}$) jeweils einer Aufzeichnungsvorlage (14) werden bestimmt und dem Rechner (R) zugeführt;

c) der Rechner (R) ermittelt:
   1) die zu korrigierende Winkeldifferenz ($\Delta\varphi$),
   2) den notwendigen Verkleinerungsmaßstab und
   3) die zu positionierenden Koordinatenwerte (x, y, z) für den Belichtungsmaskenträger (20);

d) die Aufzeichnungsvorlage (14) wird um den vom Rechner (R) ermittelten Winkelwert ($\Delta\varphi$) gedreht;

e) der Abstand zwischen einem Abbildungsobjektiv (9) und dem Belichtungsmaskenträger (20) wird gegebenenfalls korrigiert;

f) der Belichtungsmaskenträger (20) wird bezüglich der Koordinatenwerte (x, y, z) positioniert;

g) die Aufzeichnungsvorlage (14) wird auf dem lichtempfindlichen Belichtungsmaskenträger (20) reduziert abgebildet;

h) nach der sukzessiven Abbildung aller Aufzeichnungsvorlagen (14) auf dem lichtempfindlichen Belichtungsmaskenträger (20) gemäß den vorstehenden Punkten a) bis g) wird der Belichtungsmaskenträger (20) entwickelt und die Belichtungsmaske auf photolithographischem Weg erzeugt.

2. Verfahren nach Anspruch 1, dadurch gekennzeichnet, daß der Rechner (R) aus den Istkoordinatenwerten ($X_{Ist}$, $Y_{Ist}$) der Justiermarken (A, B, C, D) der Aufzeichnungsvorlagen (14) folgende Werte ermittelt:

a) den Istwinkelwert ($\varphi_{Ist}$) bezüglich der aus den Sollkoordinatenwerten ($X_{Soll}$, $Y_{Soll}$) resultierenden Sollwinkellage ($\varphi_{Soll}$),

b) die Istdiagonalenlänge zwischen den Justiermarken (A, B, C, D),

c) die Istkoordinatenwerte ($X_S$, $Y_S$) des Diagonalenschnittpunktes (S),

d) den Korrekturfaktor (K) für den Verkleinerungsmaßstab durch Vergleich mit den vorgegebenen Sollkoordinatenwerten ($X_{Soll}$, $Y_{Soll}$) der Justiermarken (A, B, C, D),

e) die neuen Istkoordinatenwerte ($X_{S'}$, $Y_{S'}$) des Diagonalenschnittpunktes (S) und die mit dem Korrekturfaktor (K) korrigierten neuen Istkoordinatenwerte ($X_{S'}$, $Y_{S'}$),

f) die zu positionierenden Koordinatenwerte (x, y) für den Belichtungsmaskenträger (20) aus den korrigierten neuen Istkoordinatenwerten ($X_{S'}$, $Y_{S'}$) des Diagonalenschnittpunktes (S) und aus den Sollkoordinatenwerten ($X_{SO}$, $Y_{SO}$) des Solldiagonalenschnittpunktes ($S_O$) und

g) den zu positionierenden Koordinatenwert (z) bezüglich der Strahlengangänge und den Schärfenkorrekturwert bezüglich des Abstandes zwischen einem Abbildungsobjektiv (9) und dem Belichtungsmaskenträgers (20) aus der Brennweite des Abbildungsobjektivs (9) und dem Korrekturwert (K).

3. Verfahren nach Anspruch 2, dadurch gekennzeichnet daß der Abstand zwischen dem Abbildungsobjektiv (9) und dem Belichtungsmaskenträger (20) erst dann korrigiert wird, wenn der Schärfenkorrekturwert einen bestimmten Betrag, beispielsweise einen Betrag größer als 1 µm, überschreitet.

4. Vorrichtung zur Durchführung des Verfahrens nach den Ansprüchen 1 und 2, gekennzeichnet durch

a) eine Beleuchtungseinrichtung mit einer Beleuchtungseinheit (1) und einem Kondensor 7 zur reduzierten Abbildung der Aufzeichnungsvorlage (14) auf dem lichtempfindlichen Belichtungsmaskenträger (20);

b) einen drehbaren Vorlagenhalter (2) zum Anbringen der Aufzeichnungsvorlage (14);

c) eine zweidimensional verschiebbare Abtasteinrichtung (15) zur Abtastung der Justiermarken (A, B, C, D) der Aufzeichnungsvorlage (14);

d) einen zweidimensional verschiebbaren Vorlagenhalter (3) zum Anbringen des lichtempfindlichen Belichtungsmaskenträgers (20);

e) ein eindimensional verschiebbares Abbildungsobjektiv (9).

5. Vorrichtung nach Anspruch 4, dadurch gekennzeichnet, daß die Beleuchtungseinheit (1) eine Quecksilberdampfhochdrucklampe (4), einen Kondensor (5), eine Blende (6) sowie einen Monochromatfilter und einen Belichtungsverschluß aufweist.

6. Vorrichtung nach Anspruch 4, dadurch gekennzeichnet, daß der Vorlagenhalter (2) aus einem auf einer Grundplatte (10) angeordneten Rahmen (11) besteht, an dem eine kreisförmige und um die optische Achse der Vorrichtung um den Winkel $\varphi$ drehbare Planplatte (12) zum Anbringen der Aufzeichnungsvorlage (14) angeordnet ist.

7. Vorrichtung nach Anspruch 6, dadurch gekennzeichnet, daß die Aufzeichnungsvorlage (14) an der Planplatte (12) mittels Ansaugleisten angebracht ist, die parallel zur Planplatte 12) verstellbar sind.

8. Vorrichtung nach Anspruch 4, dadurch gekennzeichnet, daß die Abtasteinrichtung (15) in Form eines Videomikroskops mittels eines luftgelagerten Schlittens (16) in X-Richtung auf einem luftgelagerten Schlitten (17) verstellbar ist, der auf der Grundplatte (10) in Y-Richtung verschiebbar ist.

9. Vorrichtung nach Anspruch 4, dadurch gekennzeichnet, daß der Vorlagenhalter (3) aus einem auf der Grundplatte (10) in x-Richtung verschiebbaren luftgelagerten Schlitten (18) besteht, der einen in y-Richtung verschiebbaren luftgelagerten Schlitten (19) trägt, auf dem der lichtempfindliche Belichtungsmaskenträger (20) durch Ansaugen befestigt ist.

10. Vorrichtung nach Anspruch 4, dadurch gekennzeichnet, daß das Abbildungsobjektiv (9) auf einem luftgelagerten Schlitten (21) in z-Richtung verschiebbar ist.

11. Vorrichtung nach Anspruch 6, dadurch gekennzeichnet, daß der Rahmen (11) und die Planplatte (12) mit einer Winkelmeßeinrichtung (W) verbunden sind, die an einem Zähler (Z) angeschlossen ist.

12. Vorrichtung nach den Ansprüchen 8 und 9, dadurch gekennzeichnet, daß die Schlitten (16, 17, 18, 19, 21) mit Längenmeßeinrichtungen ($L_X$, $L_Y$, $L_x$, $L_y$, $L_z$) verbunden sind, die an den Rechner (R) angeschlossen sind.

13. Vorrichtung nach Anspruch 4, dadurch gekennzeichnet, daß zur Beleuchtung der Justiermarken (A, B, C, D) für die Abtastung mittels der Abtasteinrichtung (15) eine Hilfsbeleuchtung vorgesehen ist.

14. Vorrichtung zur Durchführung des Verfahrens nach Anspruch 2, dadurch gekennzeichnet, daß der Rechner (R) mit einer numerischen Steuerung (ST) zur Positionierung des Belichtungsmaskenträgers (20) bezüglich der Koordinatenwerte (x, y, z) verbunden ist.

## Claims

1. Method for generating exposure masks for producing a recording medium containing a recording of high information density, particularly containing a multicoloured micrograph, in which method the recording is composed of at least two reduced recording originals, which are aligned with respect to each other, by means of stored coordinate values for the positioning of an exposure mask carrier, characterised by the following steps of the method:

a)  the nominal coordinate values $(X_{Nom}, Y_{nom})$ of the recording originals (14) are stored in a computer (R);

b)  the actual coordinate values $(X_{act}, Y_{act})$ of in each case one recording original (14) are determined and fed to the computer (R);

c)  the computer (R) determines:
1)  the angular difference $(\Delta\varphi)$ to be corrected,
2)  the necessary scale of reduction and
3)  the coordinate values (x, y, z) to be positioned for the exposure mask carrier (20);

d)  the recording original (14) is rotated by the angular value $(\Delta\varphi)$ determined by the computer (R);

e)  the distance between an imaging objective (9) and the exposure mask carrier (20) is corrected if necessary;

f)  the exposure mask carrier (20) is positioned with repect to the coordinate values (x, y, z);

g)  the recording original (14) is imaged at a reduced scale on the light-sensitive exposure mask carrier (20);

h)  after the successive imaging of all recording originals (14) onthe light-sensitive exposure mask carrier (20) in accordance with the preceding items a) to g), the exposure mask carrier (20) is developed and the exposure mask is generated by the photolithographic method.

2. Method according to Claim 1, characterised in that the computer (R) determines from the actual coordinate values $(X_{act}, Y_{act})$ of the alignment marks (A, B, C, D) of the recording originals (14) the following values:

a)  the actual angular value $(\varphi_{act})$ with respect to the nominal angular position $(\varphi_{nom})$ resulting from the nominal coordinate value $(X_{nom}, Y_{nom})$,

b)  the actual diagonal length between the alignment marks (A, B, C, D),

c)  the actual coordinate values $(X_S, Y_S)$ of the intersection point (S) of the diagonals,

d)  the correction factor (K) for the scale of reduction by comparison with the predetermined nominal coordinate values $(X_{nom}, Y_{nom})$ of the alignment marks (A, B, C, D),

e)  the new actual coordinate values $(X_{S'}, Y_{S'})$ of the intersection point (S) of the diagonals and the new actual coordinate values $(X_{S'}, Y_{S'})$ corrected with the correction factor (K),

f)  the coordinate values (x, y) to be positioned for the exposure mask carrier (20) from the corrected new actual coordinate values $(X_{S'}, Y_{S'})$ of the intersection point (S) of the diagonals and from the nominal coordinate values $(X_{SO}, Y_{SO})$ of the nominal intersection point $(S_O)$ of the diagonals, and

g)  the coordinate value (z) to be positioned with respect to the optical path length and the sharpness correction value with respect to the distance between an imaging objective (9) and the exposure mask carrier (20) from the focal length of the imaging objective (9) and the correction value (K).

3. Method according to Claim 2, characterised in that the distance between the imaging objective (9) and the exposure mask carrier (20) is corrected only when the sharpness correction value exceeds a certain amount, for example an amount which is greater than 1 $\mu$m.

4. Device for carrying out the method according to Claims 1 and 2, characterised by

a)  an illuminating facility comprising an illuminating unit (1) and a condenser 7 for the reduced imaging of the recording original (14) on the light-sensitive exposure mask carrier (20);

b)  a rotatable copy holder (2) for mounting the recording original (14);

c)  a scanning facility (15), which can be displaced in two dimensions, for scanning the alignment marks (A, B, C, D) of the recording original (14);

d)  a copy holder (3), which can be displaced in two dimensions, for mounting the light-sensitive exposure mask carrier (20);

e)  an imaging objective (9) which can be displaced in one dimension.

5. Device according to Claim 4, characterised in that the illuminating unit (1) comprises a highpressure mercury vapour lamp (4), a condenser (5), a diaphragm (6) and a monochromatic filter and an exposure shutter.

6. Device according to Claim 4, characterised in that the copy holder (2) consists of a frame (11) which is aranged on a base plate (10) and on which a circular plane plate (12), which is rotatable by the angle $\varphi$ around the optical axis of the device, is arranged for mounting the recording original (14).

7. Device according to Claim 6, characterised in that the recording original (14) is mounted on the plane plate (12) by means of suction bars which are adjustable parallel to the lane plate (12).

8. Device according to Claim 4, characterised in that the scanning facility (15) in the form of a video microscope can be adjusted by means of an air-supported slide (16) in the X direction on an air-supported slide (17) which is displaceable in the Y direction on the base plate (10).

9. Device according to Claim 4, characterised in that the copy holder (3) consists of an air-supported slide (18) which is displaceable in the x direction on the base plate (10) and which carries an air-supported slide (19) which is displaceable in the y direction and to which the light-sensitive exposure mask carrier (20) is attached by suction.

10. Device according to Claim 4, characterised in that the imaging objective (9) is displaceable in the z direction on an air-supported slide (21).

11. Device according to Claim 6, characterised in that the frame (11) and the plane plate (12) are joined by an angle-measuring device (W) which is connected to a counter (Z).

12. Device according to Claim 8 and 9, characterised in that the slides (16, 17, 18, 19, 21) are joined to length-measuring devices ($L_X$, $L_Y$, $L_x$, $L_Y$, $L_z$) which are connected to the computer (R).

13. Device according to Claim 4, characterised in that an auxiliary illumination is provided for illuminating the alignment marks (A, B, C, D) for the process of scanning by means of the scanning facility (15).

14. Device for carrying out the method according to Claim 2, characterised in that the computer (R) is joined to a numeric control system (ST) for positioning the exposure mask carrier (20) with respect to the coordinate values (x, y, z).

**Revendications**

1. Procédé de réalisation de masques d'insolation pour l'établissement d'un support d'enregistrement, avec un enregistrement de haute densité d'information, en particulier avec une microphotographie polychrome, dans lequel on compose l'enregistrement, au moyen de coordonnées mémorisées de positionnement d'un support de masque d'insolation, à partir de au moins deux originaux réduits ajustés au moins entre eux, procédé caractérisé par les opérations suivantes:

a) on mémorise les coordonnées de consigne ($X_{cons.}$, $Y_{cons.}$) des originaux (14) dans un calculateur (R);

b) on détermine les coordonnées réelles ($X_{réel}$, $Y_{réel}$) de chaque original (14) et on les amène au calculateur (R);

c) le calculatuer (R) détermine:
1) la différence angulaire ($\Delta\varphi$) à prendre en correction;
2) l'échelle de réduction nécessaire;
3) les coordonnées (x, y, z) à adopter pour le positionnement du support de masque d'insolation (20);

d) on fait tourner l'original (14) de la valeur angulaire ($\Delta\varphi$) déterminée par le calculateur (R);

e) on corrige éventuellement la distance entre un objectif de reproduction (9) et le support de masque d'insolation (20);

f) on positionne aux coordonnées (x, y, z) le support de masque d'insolation (20);

g) on reproduit en réduction l'original (14) sur le support de masque d'insolation photosensible (20);

h) après avoir successivement reproduit selon les points a) à g) ci-dessus tous les originaux (14) sur le support de masque d'insolation photosensible (20), on développe ce dernier et l'on réalise par photolithographie le masque d'insolation.

2. Procédé selon la revendication 1 caractérisé par le fait qu'à partir des coordonnées réelles ($X_{réel}$, $Y_{réel}$) des repères d'ajustage (A, B, C, D) des originaux (14), le calculateur (R) détermine les valeurs suivantes:

a) la valeur angulaire réelle ($\varphi_{réel}$) relativement à la position angulaire de consigne ($\varphi_{cons.}$) résultant des coordonnées des consigne ($X_{cons.}$, $Y_{cons.}$);

b) la longueur réelle des diagonales entre les repères d'ajustage (A, B, C, D);

c) les coordonnées ($X_S$, $Y_S$) du point d'intersection (S) des diagonales;

d) le facteur de correction (K) pour l'échelle de réduction par comparaison avec les coordonnées de consigne ($X_{cons.}$, $Y_{cons.}$) prescrites pour les repères d'ajustage (A, B, C, D);

e) les nouvelles coordonnées réelles ($X_{S'}$, $Y_{S'}$) du point d'intersection (S) des diagonales et les nouvelles coordonnées réelles ($X_{S'}$, $Y_{S'}$) corrigées selon le facteur de correction (K);

f) les coordonnées de positionnement (x, y) du support de masque d'insolation (20) à partir des nouvelles coordonnées réelles ($X_{S'}$, $Y_{S'}$) corrigées du point d'intersection (S) des diagonales et des coordonnées de consigne entre ($X_{SO}$, $Y_{SO}$) du point d'intersection de consigne ($S_O$) des diagonales;

g) la coordonnée de positionnement (z) relativement à la longueur de trajet des rayons et la valeur de correction de netteté relativement à la distance entre un objectif de reproduction (9) et le support de masque d'insolation (20) à partir de la distance focale dudit objectif de reproduction (9) et du facteur de correction (K).

3. Procédé selon la revendication 2 caractérisé par le fait qu'on ne corrige la distance entre l'objectif de reproduction (9) et le support de masque d'insolation (20) qu'une fois que la correction de netteté dépasse une valeur déterminée, par exemple supérieure à 1 µm.

4. Dispositif de mise en oeuvre du procédé selon les revendications 1 et 2 caractérisé par:

a) un dispositif d'éclairage avec une unité d'éclairage (1) et un condenseur (7) pour la reproduction réduite de l'original (14) sur le support de masque d'insolation photosensible (20);

b)  un support rotatif d'original (2) pour la fixation de l'original (14);

c)  un dispositif de balayage (15) déplaçable suivant deux dimensions pour détecter les repères d'ajustage (A, B, C, D) de l'original (14);

d)  un support d'original (3) déplaçable suivant deux dimensions pour la fixation du support de masque d'insolation photosensible (20);

e)  un objectif de reproduction (9) déplaçable suivant une seule dimension.

5. Dispositif selon la revendication 4 caractérisé par le fait que l'unité d'éclairage (1) comporte une lampe à vapeur de mercure à haute pression (4), un condenseur (5), un diaphragme (6) ainsi qu'un filtre monochromatique et un obturateur.

6. Dispositif selon la revendication 4 caractérisé par le fait que le support d'original (2) se compose d'un châssis (11) qui est placé sur une plaque de base (10) et sur lequel estmontée pour la fixation de l'original (14) une plaque plane (12) circulaire capable de tourner de l'angle ($\varphi$) autour de l'axe optique du dispositif.

7. Dispositif selon la revendication 6 caractérisé par le fait que l'orginal (14) est fixé sur la plaque plane (12) au moyen de barrettes d'aspiration qui sont déplaçables parallèlement à ladite plaque plane (12).

8. Dispositif selon la revendication 4 caractérisé par le fait que le dispositif de balayage (15) est déplaçable en direction (X), sous la forme d'un vidéomicroscope, au moyen d'un chariot sur palier à air (16), sur un autre chariot (17) à palier à air qui est lui-même déplaçable en direction (Y) sur la plaque de base (10).

9. Dispositif selon la revendication 4 caractérisé par le fait que le support d'original (3) se compose d'un chariot sur palier à air (18) déplaçable en direction (x) sur la plaque de base (10) et portant un autre chariot sur palier à air (19) déplaçable en direction (y) sur lequel est fixé par aspiration le support de masque d'insolation photosensible (20).

10. Dispositif selon la revendication 4 caractérisé par le fait que l'objectif de reproduction (9) est déplaçable en direction (z) sur un chariot sur palier à air (21).

11. Dispositif selon la revendication 6 caractérisé par le fait que le châssis (11) et la plaque plane (12) sont reliés à un dispositif de mesure d'angle (W), lui-même relié à un compteur (Z).

12. Dispositif selon la revendications 8 et 9 caractérisé par le fait que les chariots (16, 17, 18, 19, 21) sont reliés à des dispositifs de mesure de longueur ($L_X$, $L_Y$, $L_x$, $L_y$, $L_z$), eux-mêmes reliés au calculateur (R).

13. Dispositif selon la revendication 4 caractérisé par le fait qu'il comporte un éclairage auxiliaire pour éclairer les repères d'ajustage (A, B, C, D) en vue de leur détection par le dispositif de balayage (15).

14. Dispositif de mise en oeuvre du procédé selon la revendication 2, caractérisé par le fait que le calculateur (R) est relié à une commande numérique (ST) pour le positionnement du support de masque d'insolation (20) relativement aux coordonnées (x, y, z).

FIG. 1

FIG. 2a

FIG. 2b

FIG. 2c

0 077 888

# FIG. 3